# EUROPEAN PATENT APPLICATION

(11) **EP 4 769 108 A1**
(43) Date of publication of application: **01.07.2026**
(21) Application number: 24869751.8
(22) Date of filing: 16.05.2024
(51) Int. Cl.: G06F 3/04886

(54) **INPUT METHOD AND APPARATUS BASED ON VIRTUAL KEYBOARD**

(30) Priority: 25.09.2023 CN 202311246223
(71) Applicant: Huawei Technologies Co., Ltd., Shenzhen, Guangdong 518129 (CN)
(72) Inventor: HE, Zhenyi, Shenzhen, Guangdong 518129 (CN); ZHAO, Yunjing, Shenzhen, Guangdong 518129 (CN); SUN, Zhida, Shenzhen, Guangdong 518129 (CN)
(74) Representative: Gill Jennings & Every LLP
(86) International application number: PCT/CN2024/093670
(87) International publication number: WO 2025/066185

(57) **Abstract**

A virtual keyboard-based input method includes: detecting a first input operation performed on an operation area; mapping the first input operation to an operation on a corresponding key in a key display area, to obtain a second input operation for a virtual keyboard, where the operation area and the key display area are in different locations; obtaining an input event based on the second input operation; and in response to the input event, displaying, in an input box, input information corresponding to the input event. According to the input method provided in this application, the operation area and the key display area of the virtual keyboard are set independently of each other. When the method is applied to a wide-screen device, the operation area may be in an area that is of a touch display screen and that is more easily accessible to a hand, so that the user can perform input operations on the operation area that is more easily accessible to both hands. The input operation is mapped to the virtual keyboard to implement an input, and the key display area is displayed in a centralized manner, so that a line of sight of the user can be concentrated in the key display area, thereby reducing a movement distance of the line of sight of the user and improving user experience.

## Description

This application claims priority to Chinese Patent Application No. 202311246223.1, filed on September 25, 2023 and entitled "VIRTUAL KEYBOARD-BASED INPUT METHOD AND APPARATUS", which is incorporated herein by reference in its entirety.

### TECHNICAL FIELD

This application relates to the field of computer technologies, and in particular, to a virtual keyboard-based input method and apparatus.

### BACKGROUND

With development and evolution of mobile terminal devices, wide-screen devices gradually become a mainstream trend as users seek a large interaction range and field of view. On these wide-screen devices, inputting (for example, typing) information through a graphical interface by the users remains one of the most prevalent input technologies.

Currently, a mainstream graphical interface input technology employs a virtual keyboard (or a soft keyboard, which is a keyboard displayed on a screen), so that by touching virtual keys displayed on the screen, the users can input texts, symbols, or information supported by the keyboard. Current virtual keyboards are modeled after physical keyboards, but offer greater customization and flexibility than the physical keyboards.

When a virtual keyboard is used on a wide-screen device, a greater horizontal size of the wide-screen device makes it difficult for a user to reach central keys on the virtual keyboard while holding the device with both hands for information input, resulting in awkward and inflexible interaction and reduced input efficiency.

### SUMMARY

This application provides a virtual keyboard-based input method. The method is applied to a wide-screen device, to resolve an interaction problem between a virtual keyboard of the wide-screen device and a user, enhance input efficiency, and improve user experience.

According to a first aspect, this application provides a virtual keyboard-based input method, including: displaying an interaction interface of an electronic device, where the interaction interface includes an input box and a virtual keyboard, the virtual keyboard includes a key display area and an operation area, and the key display area and the operation area are in different locations; detecting a first input operation performed on an operation area; mapping the first input operation to an operation on a corresponding key in the key display area, to obtain a second input operation for the virtual keyboard; obtaining an input event based on the second input operation; and in response to the input event, displaying, in the input box, input information corresponding to the input event.

According to the virtual keyboard-based input method provided in this application, the operation area and the key display area are set independently of each other. When the method is applied to a wide-screen device, the operation area may be in an area that is of a touch display screen and that is more easily accessible to a hand, so that the user can perform input operations on the operation area that is more easily accessible to both hands. The input operation is mapped to the virtual keyboard to implement an input, and the key display area is displayed in a centralized manner, so that a line of sight of the user can be concentrated in the key display area, thereby reducing a movement distance of the line of sight of the user and improving user experience.

In a possible implementation, the first input operation includes a tap operation. A specific implementation of mapping the first input operation to the operation on the corresponding key in the key display area, to obtain the second input operation for the virtual keyboard is: obtaining a tap location, of the tap operation, in the operation area; mapping the tap location to the key display area, to obtain a mapping location; and obtaining, based on the mapping location, a tap operation for a target key on the virtual keyboard.

In this possible implementation, the tap location of the user in the operation area is mapped and converted to obtain the mapping location in the key display area, and the target key corresponding to the mapping location is found, so that the user performs the tap operation on the target key on the virtual keyboard. In other words, the user can implement an input operation on the virtual keyboard by performing the input operation on the operation area that is more easily accessible to the user, without a need to hit the key on the virtual keyboard. This removes the restriction of the virtual keyboard on both hands and greatly enhances input efficiency.

In another possible implementation, a specific implementation of mapping the tap location to the key display area to obtain the mapping location is: using the tap location as an input of a neural network model, and outputting the mapping location; using the tap location and location information of each key on the virtual keyboard as inputs of a neural network, and outputting the mapping location; or using the tap location and motion information of a touch body as inputs of a neural network, and outputting the mapping location.

A mapping relationship between coordinates of each location in the operation area and coordinates of each location in the key display area of the virtual keyboard is established by using the neural network model, to quickly and accurately determine the mapping location that is of the virtual keyboard and that corresponds to the tap location of the user in the operation area.

In another possible implementation, the first input operation includes the tap operation, and several historical tap operations are included before the tap operation. Before mapping the first input operation to the operation on the corresponding key in the key display area, to obtain the second input operation for the virtual keyboard, the method further includes: obtaining information about the several historical tap operations; and adjusting a tap location of a current tap operation based on the information about the several historical tap operations.

The tap location is corrected based on the information about the historical tap operations, to avoid a case in which input information fails to be triggered because the mapping location obtained through calculation falls on an edge of the virtual key.

In another possible implementation, the several historical tap operations include timing information of each historical tap operation in the several historical tap operations and tap location information of each historical tap operation.

In another possible implementation, the virtual keyboard-based input method provided in this application further includes: in response to the second input operation, generating, in the key display area, a feedback event corresponding to the second input operation.

In an example, the second input operation includes the target key being tapped, and the feedback event includes one or more of the following: the target key being highlighted, the target key vibrating, and the target key displayed as pressed. In this way, the feedback event reminds the user that the target key is successfully tapped. This improves the user's input experience.

In another possible implementation, a user performs an input operation on the operation area by using a touch body. A virtual keyboard-based input method provided in this application further includes: obtaining a spatial location of the touch body; obtaining a target location of the touch body in the key display area based on the spatial location of the touch body and a mapping relationship, where the mapping relationship indicates a mapping relationship between each spatial location of the touch body and each location in the key display area; and displaying a preset style icon at the target location in the key display area.

For example, when the user hovers a finger over a location in the operation area, a key "A" displays the preset style icon in the key display area; and when the user moves the finger and hovers over another location in the operation area, a key "C" displays the preset style icon in the key display area. The preset style icon identifies a target key of the virtual keyboard, to which a location of the user's finger is currently mapped, thereby allowing the user to interact with the virtual keyboard via the operation area.

It should be noted that the preset style icon identifies a location that is of the key display area and to which an operation currently performed on the operation area by the user is mapped. The preset style icon may be any style icon. In other words, a plurality of visual effect parameters such as a shape, a filling effect, a contour effect, a color, transparency, and texture of the preset style icon may be adjusted and combined arbitrarily. For example, different preset style icons may be a circular icon, a square icon, or a cylindrical icon. This is not limited in this application.

In another possible implementation, the virtual keyboard-based input method provided in this application further includes: obtaining image information and/or capacitance signal distribution information and/or depth information distribution information of the touch body; and visually rendering and displaying, based on the image information and/or the capacitance signal distribution information and/or the depth information distribution information of the touch body, the touch body at the target location in the key display area.

In this possible implementation, interaction between the user and the virtual keyboard is simulated in a visualized manner, to further improve input experience.

Optionally, the touch body is a finger of the user.

In another possible implementation, the operation area includes a first operation area and a second operation area; and the key display area is in a middle location of a touch display screen, and the first operation area and the second operation area are on two sides of the key display area; or the key display area is on one side of a touch display screen, the first operation area is on the other side of the touch display screen, and the second operation area overlaps the key display area.

In this possible implementation, the first operation area and the second operation area are distributed on the two sides of the touch display screen, so that the user can touch the operation areas with fingers when holding the wide-screen device with both hands, and perform the input operation on the operation area; and keys on the virtual keyboard are center displayed, so that the line of sight of the user can be concentrated in the key display area, thereby reducing a movement distance of the line of sight of the user and improving user experience.

In another possible implementation, the operation area and the key display area are on different touch display screens. For example, in a multi-screen interaction field or an XR field, in a multi-screen interaction scenario, the user may input typing information on one of the touch display screens, and then focus a line of sight on another screen to obtain feedback information of the typing input; and in an XR interaction scenario, the user may input typing information on an additional touch display screen device, and then observe an interaction result on a head-mounted display to obtain a typing-related visual feedback.

Alternatively, the operation area and the key display area are on different devices. For example, in a multi-device collaboration field, the user may associate two or more devices, perform a typing operation on one of the devices, and then observe a feedback effect of the input information on another device.

Certainly, in addition to a typing scenario, the virtual keyboard-based input method provided in this application may be applied to any scenario in which gesture information is obtained using a touch display screen, for example, any gesture operation scenario such as creation, editing, and a system operation.

According to a second aspect, this application further provides a virtual keyboard-based input apparatus, including a display module, a detection module, a mapping module, an obtaining module, and a responding module. The display module is configured to display an interaction interface of an electronic device, the interaction interface includes an input box and a virtual keyboard, and the virtual keyboard includes a key display area and an operation area. The detection module is configured to detect a first input operation performed on the operation area. The mapping module is configured to map the first input operation to an operation on a corresponding key in the key display area, to obtain a second input operation for the virtual keyboard, where the operation area and the key display area are in different locations. The obtaining module is configured to obtain an input event based on the second input operation. The responding module is configured to: in response to the input event, display, in the input box, input information corresponding to the input event.

In a possible implementation, the first input operation includes a tap operation. The mapping module is specifically configured to: obtain a tap location of the tap operation in the operation area; map the tap location to the key display area, to obtain a mapping location; and obtain, based on the mapping location, a tap operation for a target key on the virtual keyboard.

In another possible implementation, a specific implementation of mapping the tap location to the key display area to obtain the mapping location is: using the tap location as an input of a neural network model, and outputting the mapping location; using the tap location and location information of each key on the virtual keyboard as inputs of a neural network, and outputting the mapping location; or using the tap location and motion information of a touch body as inputs of a neural network, and outputting the mapping location.

In another possible implementation, the first input operation includes the tap operation, and several historical tap operations are included before the tap operation. The virtual keyboard-based input apparatus provided in this application further includes an adjustment module. The adjustment module is configured to: obtain information about the several historical tap operations; and adjust a tap location of a current tap operation based on the information about the several historical tap operations.

In another possible implementation, the several historical tap operations include timing information of each historical tap operation in the several historical tap operations and tap location information of each historical tap operation.

In another possible implementation, the responding module is further configured to: in response to the second input operation, generate, in the key display area, a feedback event corresponding to the second input operation.

In another possible implementation, the second input operation includes the target key being tapped, and the feedback event includes one or more of the following: the target key being highlighted, the target key vibrating, and the target key displayed as pressed.

In another possible implementation, a user performs an input operation on the operation area by using a touch body. The virtual keyboard-based input apparatus provided in this application further includes an acquisition module. The acquisition module is configured to obtain a spatial location of the touch body. The obtaining module is configured to obtain a target location of the touch body in the key display area based on the spatial location of the touch body and a mapping relationship, where the mapping relationship indicates a mapping relationship between each spatial location of the touch body and each location in the key display area. The display module is configured to display a preset style icon at the target location in the key display area.

In another possible implementation, the acquisition module is further configured to obtain image information and/or capacitance signal distribution information and/or depth information distribution information of the touch body. The display module is further configured to: visually render and display, based on the image information and/or the capacitance signal distribution information and/or the depth information distribution information of the touch body, the touch body at the target location in the key display area of the virtual keyboard visually render and display, based on the image information and/or the capacitance signal distribution information and/or the depth information distribution information of the touch body.

Optionally, the touch body is a finger of the user.

In another possible implementation, the operation area includes a first operation area and a second operation area; and the key display area is in a middle location of a touch display screen, and the first operation area and the second operation area are on two sides of the key display area; or the key display area is on one side of a touch display screen, the first operation area is on the other side of the touch display screen, and the second operation area overlaps the key display area.

In another possible implementation, the operation area and the key display area are on different touch display screens; or the operation area and the key display area are on different devices.

According to a third aspect, an embodiment of this application provides an electronic device, including a memory and a processor. The memory stores instructions. When the instructions are executed by the processor, the method according to the first aspect is implemented.

According to a fourth aspect, an embodiment of this application provides a computer-readable storage medium. The computer-readable storage medium stores a computer program. When the computer program is executed by a processor, the method according to the first aspect is implemented.

According to a fifth aspect, an embodiment of this application further provides a computer program or a computer program product. The computer program or the computer program product includes instructions. When the instructions are executed, a computer is enabled to perform the method according to the first aspect.

According to a sixth aspect, an embodiment of this application further provides a chip, including at least one processor and a communication interface. The processor is configured to perform the method according to the first aspect.

### BRIEF DESCRIPTION OF DRAWINGS

To describe the technical solutions of a plurality of embodiments disclosed in the specification more clearly, the following briefly describes the accompanying drawings used for describing embodiments. It is clear that the accompanying drawings in the following descriptions are merely the plurality of embodiments disclosed in the specification, and a person of ordinary skill in the art may still derive other drawings from these accompanying drawings without creative efforts.

The following briefly describes accompanying drawings used for describing embodiments or the conventional technology.
FIG. 1 is a diagram of a separated virtual keyboard on a display screen;
FIG. 2 is a diagram of an adaptive magnifying virtual keyboard on a display screen;
FIG. 3 is a diagram of a floating virtual keyboard on a display screen;
FIG. 4 is a diagram in which an operation area and a key display area are the same;
FIG. 5 is a diagram of an application scenario of a virtual keyboard-based input method according to an embodiment of this application;
FIG. 6 is a schematic flowchart of a virtual keyboard-based input method according to an embodiment of this application;
FIG. 7 is a distribution diagram of an operation area and a display area of a virtual keyboard on a display screen;
FIG. 8 is a distribution diagram of an operation area and a key display area on a display screen;
FIG. 9 is another distribution diagram of an operation area and a key display area on a display screen;
FIG. 10 and FIG. 11 are diagrams separately depicting that a wide-screen device is placed on a support surface and a user performs interactive input with a display screen with two hands;
FIG. 12 shows a mapping relationship between coordinates of a location in an operation area and coordinates of a location in a key display area;
FIG. 13 is a diagram in which a plurality of touch points are collected by a screen sensor in a typing process;
FIG. 14 is a partial enlarged view of FIG. 13;
FIG. 15 to FIG. 17 respectively show several examples of preset style icons for identifying a mapping location in a key display area of a virtual keyboard;
FIG. 18 is a diagram of a structure of a virtual keyboard-based input apparatus according to an embodiment of this application; and
FIG. 19 is a diagram of a structure of an electronic device according to an embodiment of this application.

### DESCRIPTION OF EMBODIMENTS

The term "and/or" mentioned in this specification describes an association relationship for describing associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this application, the terms "first", "second", and the like are intended to distinguish between different objects, but do not indicate a particular order of the objects. For example, a first input operation, a second input operation, and the like are used to distinguish between different input operations, but are not used to describe a specific order of the input operations.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the word like "example" or "for example" is intended to present a relative concept in a specific manner.

In descriptions of embodiments of this application, unless otherwise specified, "a plurality of" means two or more. For example, a plurality of processing units mean two or more processing units, and a plurality of elements mean two or more elements.

When a user interacts with a virtual keyboard of a current wide-screen device, in the conventional technology, the virtual keyboard mainly adopts the following three arrangement manners.

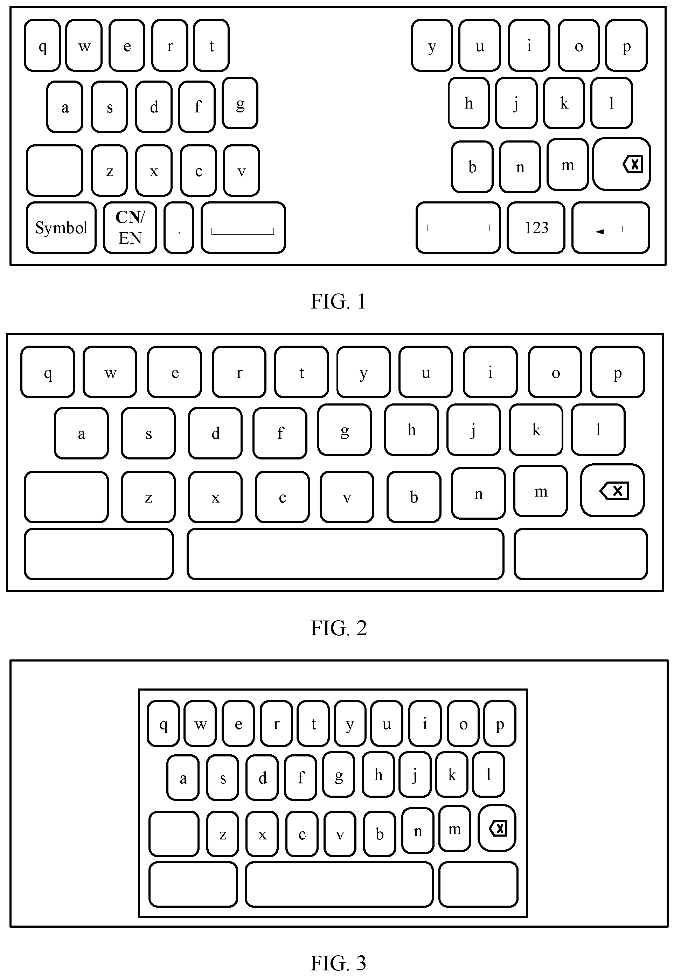

Separation: In this design manner, a main operation interface of the virtual keyboard is distributed on two sides of a screen edge, and high-frequency virtual keys that can be interacted/operated are provided at left and right ends of the virtual keyboard, making it convenient for the user to hold and input information, as shown in FIG. 1.

Adaptive magnification: In this design manner, a width of the virtual keyboard is consistent with a main interface of the wide-screen device, and a display height of the virtual keyboard is adjusted based on a specific proportion, so that virtual keys are distributed on an entire virtual keyboard interface, as shown in FIG. 2.

Floating mode: In this design manner, during initialization, the virtual keyboard is generally displayed in the center of the device proportionally, but the user may move a location of the virtual keyboard to facilitate input, as shown in FIG. 3. This type of keyboard displays information in a centralized manner, so the user's line of sight does not have to travel across the entire screen.

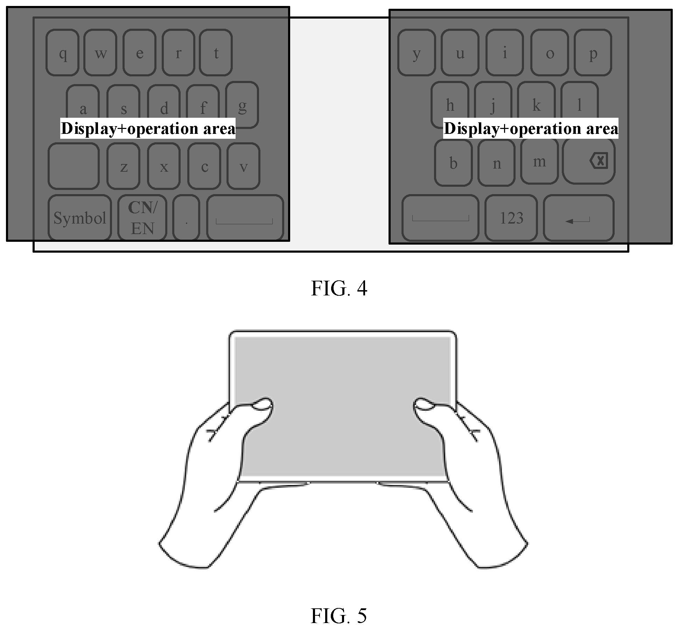

In the implementation of the conventional technology, when interacting with the foregoing virtual keyboards, the user needs to directly interact with virtual keys, that is, hit the corresponding virtual keys; otherwise, the virtual keyboard cannot feed back corresponding input information, as shown in FIG. 4.

When the user performs an input on the wide-screen device (for example, a foldable computer, a foldable mobile phone, or a tablet computer) by using the virtual keyboard designed above, a conflict of inconsistency occurs between a control area of both hands and a central area of a line of sight, which causes the following situations:

When the user uses the virtual keyboards shown in FIG. 1 and FIG. 2, although both hands have enough operation space, both eyes need to take care of the entire virtual keyboard interface.

When the user uses the virtual keyboard shown in FIG. 3, although operation interface space of the virtual keyboard occupies a small proportion and space utilization of the operation interface is improved, interaction space of both hands is limited, resulting in awkward and inflexible interaction and reduced input efficiency.

A related solution provides a virtual keyboard that can predict keystroke locations based on typing behavior. This technology allows the virtual keyboard to adapt to the user's input habits, thereby enhancing input efficiency.

In this solution, the user's typing behavior information is collected, including but not limited to typing pattern information, previous keystroke behavior information, details of a virtual keyboard for typing, and context parameter information related to interaction between a device of a displayed virtual keyboard and a user; then a plurality of features are extracted and fused to obtain a plurality of feature vectors; a neural network is trained to identify known features; and location features that affect typing behavior are learned, to predict a location of a virtual keyboard that corresponds to the user.

The solution needs to be based on a large amount of sample data, data collection and model training need to be accumulated for a long time, and a model obtained through training lacks universality, resulting in poor versatility of the virtual keyboard formed by the fusion training model.

In view of the foregoing problem, this application provides a virtual keyboard-based input method. An operation area of a virtual keyboard (also referred to as an operation area for ease of description below) and a key display area are set independently of each other. When the method is applied to a wide-screen device, the operation area may be in an area that is of a touch display screen and that is more easily accessible to a hand, so that the user can perform input operations on the operation area that is more easily accessible to both hands. The input operation is mapped to the virtual keyboard to implement an input, and the key display area is displayed in a centralized manner, so that a line of sight of the user can be concentrated in the key display area, thereby reducing a movement distance of the line of sight of the user and improving user experience.

FIG. 5 is a diagram of an application scenario of a virtual keyboard-based input method according to an embodiment of this application. As shown in FIG. 5, a user may hold a wide-screen device with both hands, and thumbs of the user are used as touch bodies to interact with a touch display screen to implement an input operation.

The wide-screen device mentioned in embodiments of this application may be understood as a device with a large screen width. For example, the wide-screen device may be a foldable computer, a dual-screen computer, a foldable mobile phone, a wide-screen mobile phone, or a wide-screen tablet computer.

Certainly, FIG. 5 shows only an example of an application scenario of the virtual keyboard-based input method provided in this embodiment of this application, and does not constitute a limitation on embodiments of this application. The input method provided in embodiments of this application may be further applied to another application scenario. For example, the wide-screen device is disposed on a support object, and both hands of the user are used as touch bodies to interact with the touch display screen to implement the input operation. For another example, in a multi-screen interaction scenario, the user may input typing information on one of touch display screens, and then focus a line of sight on another screen to obtain feedback information of the typing input. For another example, in an XR interaction scenario, the user may input typing information on an additional touch display screen device, and then observe an interaction result on a head-mounted display to obtain a typing-related visual feedback. For another example, in a multi-device collaboration scenario, the user may associate two or more devices, perform a typing operation on one of the devices, and then observe a feedback effect of the input information on another device. Alternatively, the touch body may be another object that can interact with the touch display screen, for example, a stylus.

Certainly, in addition to a typing scenario, the virtual keyboard-based input method provided in embodiments of this application may be applied to any scenario in which gesture information is obtained using a touch display screen, for example, any gesture operation scenario such as creation, editing, and a system operation.

The following uses a typing scenario of a wide-screen device as an example to describe a detailed implementation of the virtual keyboard-based input method provided in embodiments of this application. An implementation of another scenario is similar to that of the virtual keyboard-based input method. For a specific implementation, refer to detailed implementation descriptions of the typing scenario of the wide-screen device. For brevity, details are not described in this embodiment of this application.

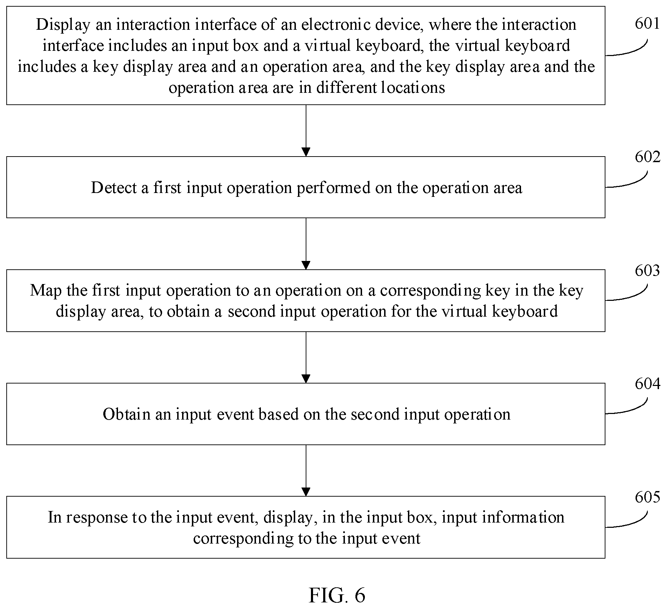

FIG. 6 is a schematic flowchart of a virtual keyboard-based input method according to an embodiment of this application. The method may be applied to any wide-screen device to implement friendly typing interaction, reduce a line-of-sight movement distance of a user, and improve the user's typing input experience. As shown in FIG. 6, the virtual keyboard-based input method provided in this embodiment of this application includes at least step S601 to step S604.

Step S601: Display an interaction interface of an electronic device.

When the user needs to input information, the user performs an operation on a touch display screen (for example, the user taps an input box), to invoke a virtual keyboard to perform an input operation. For example, when detecting the operation of tapping the input box by the user, the electronic device displays an input interaction interface, where the input interaction interface includes the input box and the virtual keyboard, the virtual keyboard includes a key display area and an operation area, and the key display area and the operation area are in different locations of the touch display screen.

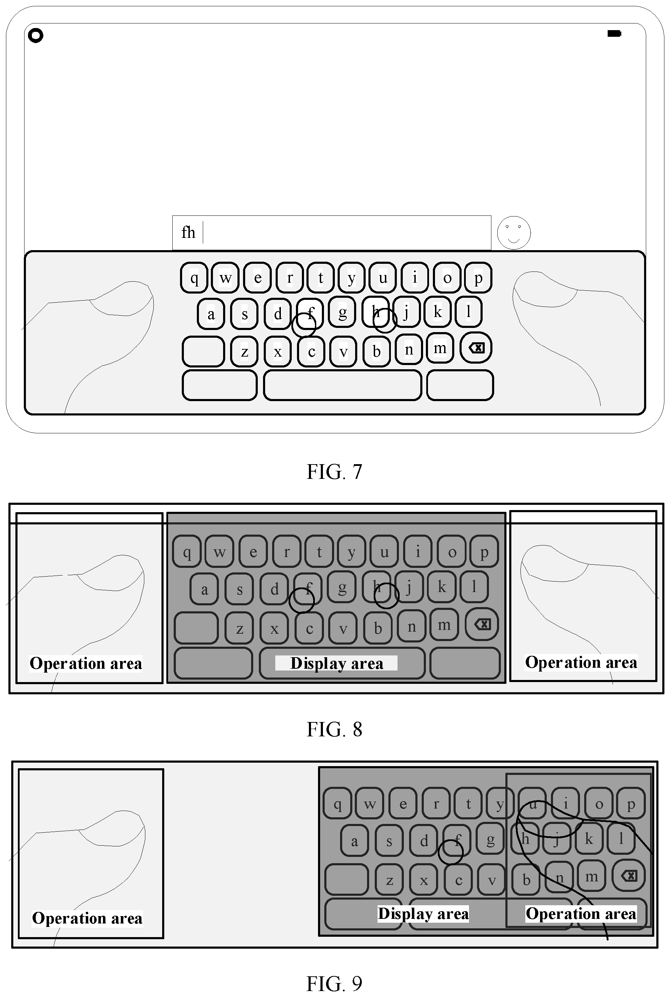

FIG. 7 is a diagram of the input interaction interface. As shown in FIG. 7, the key display area of the virtual keyboard is centrally displayed on the display screen, and operation areas are on two sides of the key display area and are close to edges of the display screen, so that a finger can touch the key display area to perform the input operation.

Step S602: Detect a first input operation performed on the operation area.

The user performs the input operation on the operation area of the touch display screen of the wide-screen device, and the touch display screen detects, by using a sensor in the touch display screen, the input operation performed by the user on the operation area.

The input operation may be an operation of direct contact between a touch body (for example, the user's finger) and the touch display screen or an input operation performed in proximity above the touch display screen without direct contact with the touch display screen.

For example, when the user taps a location in the operation area of the touch display screen with a finger, the sensor in the touch display screen detects that the location is tapped, and generates a corresponding signal to inform a processor that the location of the screen is tapped.

The sensor in the touch display screen may be any sensor that can implement a function required in this embodiment of this application. For example, the sensor disposed in the touch display screen may be a pressure sensor. The pressure sensor is configured to sense a pressure signal, and may convert the pressure signal into an electrical signal. There are a plurality of types of pressure sensors such as a resistive pressure sensor and an inductive pressure sensor. When a touch operation is performed on the touch display screen, the wide-screen device detects touch operation intensity by using the pressure sensor. The wide-screen device may also calculate a touch location based on a detection signal of the pressure sensor. In some examples, touch operations that are performed on a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to a first pressure threshold is performed on an SMS message application icon, an instruction for creating a new SMS message is executed.

For another example, the sensor disposed in the touch display screen may be alternatively a touch sensor (for example, a capacitive touch sensor). The touch sensor is configured to detect a touch operation performed on or near the touch sensor. The touch sensor may transfer the detected touch operation to an application processor to determine a type of a touch event. A visual output related to the touch operation may be provided on the display screen.

Step S603: Map the first input operation to an operation on a corresponding key in the key display area, to obtain a second input operation for the virtual keyboard.

After the first input operation performed on the operation area is detected, the input operation is mapped and converted into the second input operation for the virtual keyboard, so that information can be input without hitting the virtual keyboard.

The operation area may be set in a location that is easily accessible to the user's finger, so that the user conveniently performs the input operation on the operation area. The key display area may be centralized in an area of the display screen, to reduce a line-of-sight movement of the user.

FIG. 8 is a distribution diagram of an operation area and a key display area on a display screen. As shown in FIG. 8, the operation area includes a first operation area and a second operation area, the key display area is centered in the display screen, and the first operation area and the second operation area are on the two sides of the key display area respectively. The first operation area and the second operation area are close to two sides of the display screen, so that the user can conveniently input information with a thumb when holding the device with both hands. The virtual keyboard is displayed in the center, so that the user's line of sight does not need to travel across the entire screen, thereby reducing a line of sight movement distance of the user and making information input more efficient.

The key display area is a display area of keys on the virtual keyboard, and is used to display the keys on the virtual keyboard.

FIG. 9 is another distribution diagram of an operation area and a key display area on a display screen. As shown in FIG. 9, the key display area is on the right side of the display screen, one operation area is on the left side of the display screen, and the other operation area is on the right side of the display screen and partially overlaps the key display area. In this way, only a mapping relationship between the operation area on the left side and the virtual keyboard needs to be established, and for the operation area on the right side, an information input operation may be implemented by directly hitting a target key on the virtual keyboard.

In an example, the key display area and the operation area may have a same background color on an input interface. The background color is different from a background color of another area of the input interface, to distinguish the key display area and the operation area from the another area, so that the user can conveniently find the key display area and the operation area. Optionally, the operation area of the virtual keyboard further includes prompt information to prompt the user to perform an input operation on this area. For example, a prompt text "Perform an input operation here" is displayed in the operation area of the virtual keyboard, or a prompt gesture "A rendered virtual finger" is displayed in the operation area of the virtual keyboard to prompt the user to perform the input operation on this area.

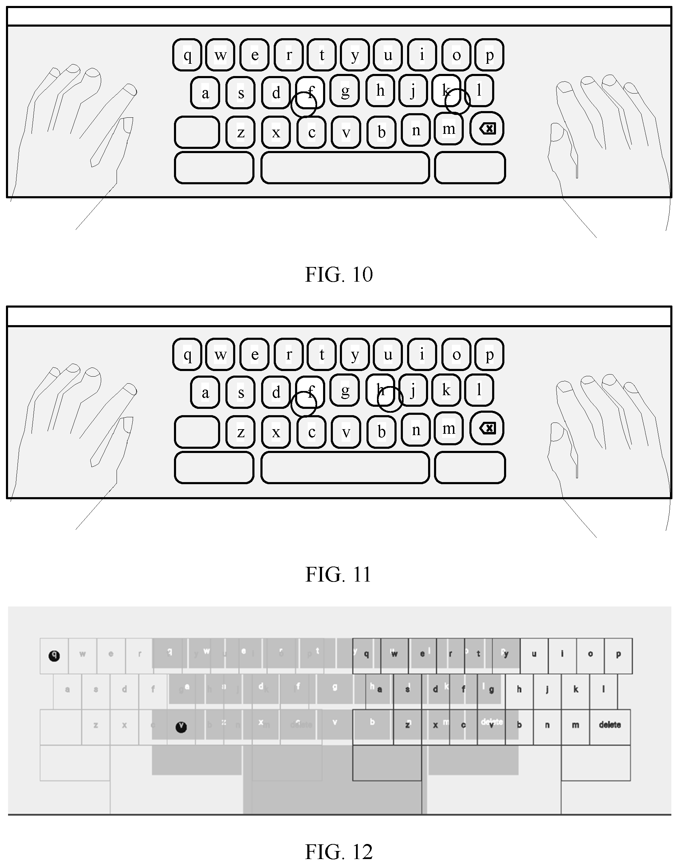

In some other examples, the wide-screen device may be alternatively placed on a support surface, and an input operation is performed on the operation area with five fingers of both hands, to further enhance input efficiency, as shown in FIG. 10 and FIG. 11.

The operation in the operation area may be mapped to the virtual keyboard in a plurality of manners.

For example, a mapping table may be made by collecting statistics on a mapping relationship between coordinates of each location in the operation area and coordinates of each location in the key display area, and the mapping table records the mapping relationship between coordinates of each location in the operation area and coordinates of each location in the key display area.

When the user taps a location in the operation area, the sensor in the touch display screen detects coordinates of the tap location, and obtains, by searching the mapping table, coordinates that are of a mapping location in the key display area and that correspond to the coordinates of the tap location.

For example, a mapping formula between coordinates of each location in the operation area and coordinates of each location in the key display area may be determined, and coordinates of a location that correspond to the operation performed by the user on the operation area are substituted into the mapping formula, to obtain coordinates of the mapping location in the key display area through calculation.

In an example, the mapping formula may be y=ax+b. An actual trigger location of the user is mapped to a target location of the virtual keyboard for mapping. FIG. 8 is used as an example. A mapping formula corresponding to the left operation area is y=0.85x+0.45, and a mapping formula corresponding to the right operation area is y=0.85x-0.2.

For example, in the mapping formula y=ax+b of the left operation area, values of parameters a and b are a∈[0.5, 1.5] and b∈(0, 1) respectively; and in the mapping formula y=ax+b of the right operation area, values of parameters a and b are a∈[0.5, 1.5] and b∈(-1, 0) respectively.

For another example, the mapping relationship between coordinates of each location in the operation area and coordinates of each location in the key display area may be further established by using a neural network. FIG. 12 shows the mapping relationship between coordinates of a location in the operation area and coordinates of a location in the key display area.

In an example, inputs of the neural network may be only coordinates of a location actually triggered by the user in the operation area, and outputs are coordinates of the mapping location in the virtual keyboard.

In another example, for a specific virtual keyboard, inputs of the neural network may further include coordinates of a location actually triggered by the user in the operation area and location information of each virtual key on the virtual keyboard, and outputs are coordinates of the mapping location in the virtual keyboard. For different layouts of the virtual keyboard, a corresponding neural network is trained, so that coordinates of a mapping location in the virtual keyboard are predicted more accurately.

In another example, inputs of the neural network may further include coordinates of a location actually triggered by the user in the operation area and motion information (for example, a speed and an acceleration) of the touch body, and outputs are coordinates of the mapping location in the virtual keyboard. The coordinates of the mapping location in the virtual keyboard are predicted more accurately by combining the motion information of the touch body.

In another example, inputs of the neural network may further include coordinates of a location actually triggered by the user in the operation area, location information of each virtual key on the virtual keyboard, and motion information (for example, a speed and an acceleration) of the touch body, and outputs are coordinates of the mapping location in the virtual keyboard.

It may be understood that a training sample of the neural network varies with inputs of the neural network. For example, in the first example, the inputs of the neural network include only the coordinates of the location actually triggered by the user. The training sample of the neural network includes the coordinates of the location in the operation area and a label of the sample. The label is the coordinates of the mapping location in the key display area. In the second example, the inputs of the neural network include the coordinates of the location actually triggered by the user in the operation area and the location information of each virtual key on the virtual keyboard. The training sample of the neural network includes the coordinates of the location in the operation area, the location information of each virtual key on the virtual keyboard, and a label of the sample. The label is the coordinates of the mapping location in the key display area of the virtual keyboard.

Optionally, the neural network may be a multilayer perceptron (multilayer perceptron, MLP) neural network.

After the mapping location of the actually triggered location on the virtual keyboard is obtained, a tap operation for the target key on the virtual keyboard is obtained based on the mapping location.

For example, if the mapping location of the actually triggered location on the virtual keyboard is a location of a key "S", a tap operation of the key "S" is obtained.

In some other examples, to avoid a case in which a mapping location corresponding to an input operation falls on an edge of a target key or between two keys, and consequently an information input cannot be triggered, the input operation may be, for example, that the user taps a point a1 in the operation area with a finger, where the point a1 is mapped to a middle location between a key "a" and the key "s" in the key display area of the virtual keyboard. In this case, whether the key "a" or the key "s" is triggered cannot be determined, resulting in a case in which the information input cannot be triggered. This embodiment of this application further provides a touch point correction mechanism, that is, before step S603 is performed, the input operation of the user in the operation area is adjusted.

A typing operation is used as an example. The user performs a plurality of tap operations on the operation area to input information. When determining a falling point (which may also be referred to as a tap location) of a current tap operation, the user adjusts the tap location of the current tap operation based on information about historical tap operations. Optionally, the historical tap operations include timing information of each historical tap operation in the historical tap operations and tap location information of each historical tap operation.

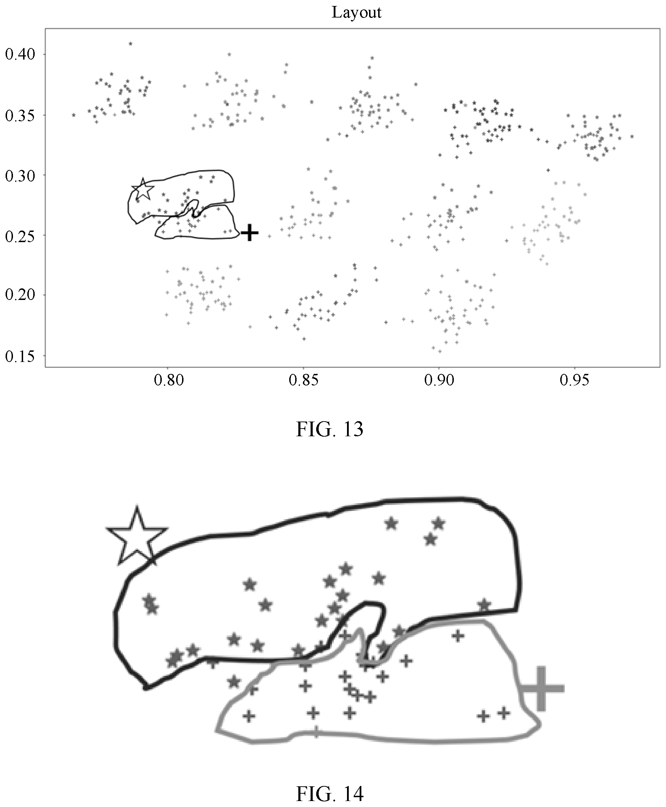

Based on typing behavior of the user, information received by a sensor module of the display screen is actually information about a series of touch points associated in a time sequence. Trajectories of keystroke information of the user during actual typing may be biased due to different preceding and following keys associated with a current virtual key. For example, when a key (for example, a key "Q") above the key "A" is pressed before the key "A", touch points fall on a lower part of the key "A" (for example, touch points shown by "plus" signs in FIG. 13 and FIG. 14). When a key (for example, a key "Z") below the key "A" is pressed before the key "A", touch points fall on an upper part of the key "A" (for example, touch points shown by "*" signs in FIG. 13 and FIG. 14).

In this case, information about touch points actually collected by the sensor is corrected in combination with timing information f (pos_t, ..., pos_0), to avoid a case in which the input information cannot be triggered because a mapping point obtained through calculation falls on an edge of the virtual key. For example, if a touch point of a tap operation immediately preceding the current tap operation is above the touch point of the current tap operation, the touch point of the current tap operation is adjusted upward for correction. If a touch point of a tap operation immediately preceding the current tap operation is below the touch point of the current tap operation, the touch point of the current tap operation is adjusted downward for correction.

Step S604: Obtain an input event based on the second input operation.

After the second operation of the user on the virtual keyboard is obtained, the input event for the virtual keyboard is generated. For example, if the second operation on the virtual keyboard is sequentially tapping keys "H", "U", "A", "W", "E", and "I", the input event is sequentially inputting "H", "U", "A", "W", "E", and "I".

Step S605: In response to the input event, display, in the input box, input information corresponding to the input event.

After the input event is determined, in response to the input event, the input information, for example, "HUAWEI", is displayed in the input box.

In some other examples, the method provided in this embodiment of this application may further include: in a process in which the user inputs information in the operation area, performing response feedback on the second input operation mapped to the virtual keyboard; that is, in response to the second input operation, generating, in the key display area of the virtual keyboard, a feedback event corresponding to the second input operation.

Optionally, the second input operation includes the target key being tapped, and the feedback event includes one or more of the following: the target key being highlighted, the target key vibrating, the target key displayed as pressed, and an actual touch point being displayed on the target key. In this way, the feedback event reminds the user that the target key is successfully tapped. This improves the user's input experience.

In some other examples, in a process in which the user inputs information in the operation area, the method further includes: mapping a location of a finger of the user to the key display area of the virtual keyboard in real time, to enable the user to learn of a location that is of the virtual keyboard and to which the location of the current finger in the operation area is correspondingly mapped.

For example, the user performs an input operation on the operation area with a finger; obtains a spatial location of the finger by using a sensor (for example, the spatial location of the finger may be detected by using a capacitive sensor); obtains a target location of the finger in the key display area of the virtual keyboard based on the spatial location of the finger and a mapping relationship, where the mapping relationship indicates a mapping relationship between each spatial location of the finger and each location in the key display area of the virtual keyboard; and displays a preset style icon at the target location in the key display area of the virtual keyboard.

For example, when the user hovers a finger over a location in the operation area, a key "A" displays the preset style icon in the key display area of the virtual keyboard; and when the user moves the finger and hovers over another location in the operation area, a key "C" displays the preset style icon in the key display area of the virtual keyboard. The preset style icon identifies a target key of the virtual keyboard, to which a location of the user's finger is currently mapped, thereby allowing the user to interact with the virtual keyboard via the operation area.

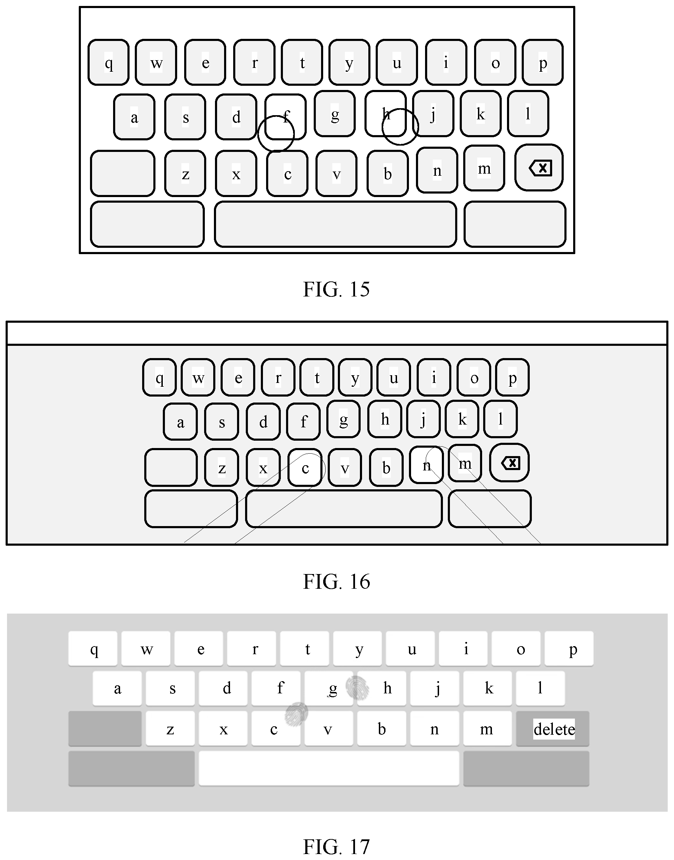

It should be noted that the preset style icon identifies a location that is of the key display area of the virtual keyboard and to which an operation currently performed on the operation area by the user is mapped. The preset style icon may be any style icon. In other words, a plurality of visual effect parameters such as a shape, a filling effect, a contour effect, a color, transparency, and texture of the preset style icon may be adjusted and combined arbitrarily. For example, the preset style may be different, and the preset style may be a circular icon (shown in FIG. 15), a square icon, or a cylindrical icon (shown in FIG. 16). The preset style may also be represented by a pictogram. For example, if the touch body is a finger of the user, a preset style image may be a fingerprint (shown in FIG. 17). A specific implementation of the preset style icon is not limited in this application.

In another example, during user input, visually mapping a finger of the user to the key display area of the virtual keyboard for display. For example, image information and/or capacitance signal distribution information and/or depth information distribution information of the finger of the user are obtained; a two-dimensional image of the finger of the user is obtained based on the image information and/or the capacitance signal distribution information and/or the depth information distribution information of the touch body; and the two-dimensional image of the finger of the user is visually rendered and displayed at the target location in the key display area of the virtual keyboard. Specifically, RGB image information of the finger of the user is captured by using a camera of the wide-screen device, the two-dimensional image of the user is obtained based on the RGB image information, and the two-dimensional image of the finger of the user is rendered and displayed at the target location in the key display area of the virtual keyboard (namely, a location that is in the key display area of the virtual keyboard and to which the finger in the operation area is mapped). In this way, as the user moves the finger in the operation area, the finger of the user that is rendered in the key display area of the virtual keyboard moves, so that the user may learn of, in real time, a mapping location that is in the key display area of the virtual keyboard and to which the finger in the operation area is mapped.

Alternatively, an image of the finger of the user may be rendered and displayed in another manner. For example, capacitance signal distribution and/or depth information distribution of the finger are detected by using the sensor in the touch display screen. Based on the distribution information, the image of the finger is rendered and displayed at the target location in the key display area of the virtual keyboard (namely, a location that is in the key display area of the virtual keyboard and to which the finger in the operation area is mapped).

It should be explained that the operation area mentioned in the context of this embodiment of this application is an area on a surface of the touch display screen and an area above the area. For example, the operation area shown in FIG. 8 includes a part defined by the operation area of the touch display screen and a space area above the part. When the user moves a finger into the operation area, the sensor in the device starts to collect operations of the finger, for example, a movement, a tap, and a gesture in the operation area, the finger is visually mapped to the key display area of the virtual keyboard, so that the user can learn of a location that is in the key display area of the virtual keyboard and to which the operation of the finger in the operation area corresponds. For example, if the user moves the finger between a point a1 and a point c1 of the operation area, the key display area of the virtual keyboard displays movement of the finger between the key "A" and the key "C". When the user moves the finger to the point c1 in the operation area and taps the surface of the touch display screen at the point c1, it is displayed in the key display area of the virtual keyboard that the key "C" is tapped by the finger, and the key "C" generates a feedback event (for example, highlighting and vibration) to inform the user that the key "C" is tapped. In response to the tap event of the key "C", a character "C" is input, and the character "C" is displayed in the input box in the display area of the virtual keyboard.

Based on a same concept as the foregoing embodiment of the virtual keyboard-based input method, an embodiment of this application further provides a virtual keyboard-based input apparatus 1800. The virtual keyboard-based input apparatus 1800 may be deployed in an electronic device to implement more user-friendly input interaction on a wide-screen device. The input apparatus 1800 includes units or modules configured to implement the steps in the input method shown in FIG. 5 to FIG. 17.

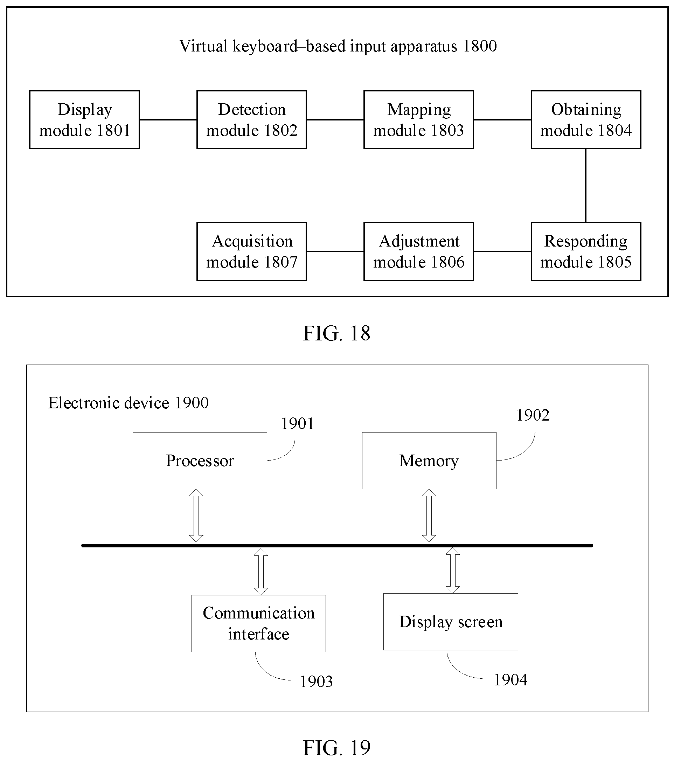

FIG. 18 is a diagram of a structure of a virtual keyboard-based input apparatus according to an embodiment of this application. As shown in FIG. 18, the virtual keyboard-based input apparatus 1800 includes at least a display module 1801, a detection module 1802, a mapping module 1803, an obtaining module 1804, and a responding module 1805. The display module 1801 is configured to display an interaction interface of an electronic device, where the interaction interface includes an input box and a virtual keyboard, the virtual keyboard includes a key display area and an operation area, and the key display area and the operation area are in different locations. The detection module 1802 is configured to detect a first input operation performed on the operation area. The mapping module 1803 is configured to map the first input operation to an operation on a corresponding key in the key display area of the virtual keyboard, to obtain a second input operation for the virtual keyboard. The obtaining module 1804 is configured to obtain an input event based on the second input operation. The responding module 1805 is configured to: in response to the input event, display, in the input box, input information corresponding to the input event.

In a possible implementation, the first input operation includes a tap operation. The mapping module 1803 is specifically configured to: obtain a tap location of the tap operation in the operation area; map the tap location to the key display area of the virtual keyboard, to obtain a mapping location; and obtain, based on the mapping location, a tap operation for a target key on the virtual keyboard.

In another possible implementation, a specific implementation of mapping the tap location to the key display area of the virtual keyboard to obtain the mapping location is: using the tap location as an input of a neural network model, and outputting the mapping location; using the tap location and location information of each key on the virtual keyboard as inputs of a neural network, and outputting the mapping location; or using the tap location and motion information of a touch body as inputs of a neural network, and outputting the mapping location.

In another possible implementation, the first input operation includes the tap operation, and several historical tap operations are included before the tap operation. The virtual keyboard-based input apparatus 1800 provided in this application further includes an adjustment module 1806. The adjustment module is configured to: obtain information about the several historical tap operations; and adjust a tap location of a current tap operation based on the information about the several historical tap operations.

In another possible implementation, the several historical tap operations include timing information of each historical tap operation in the several historical tap operations and tap location information of each historical tap operation.

In another possible implementation, the responding module 1805 is further configured to: in response to the second input operation, generate, in the key display area of the virtual keyboard, a feedback event corresponding to the second input operation.

In another possible implementation, the second input operation includes the target key being tapped, and the feedback event includes one or more of the following: the target key being highlighted, the target key vibrating, and the target key displayed as pressed.

In another possible implementation, a user performs an input operation on the operation area by using a touch body. The virtual keyboard-based input apparatus 1800 provided in this application further includes an acquisition module 1807. The acquisition module 1807 is configured to obtain a spatial location of the touch body. The obtaining module 1804 is configured to obtain a target location of the touch body in the key display area of the virtual keyboard based on the spatial location of the touch body and a mapping relationship, where the mapping relationship indicates a mapping relationship between each spatial location of the touch body and each location in the key display area of the virtual keyboard. The display module 1801 is configured to display a preset style icon at the target location in the key display area of the virtual keyboard.

In another possible implementation, the acquisition module 1807 is further configured to obtain image information and/or capacitance signal distribution information and/or depth information distribution information of the touch body. The display module 1801 is further configured to: visually render and display, based on the image information and/or the capacitance signal distribution information and/or the depth information distribution information of the touch body, the touch body at the target location in the key display area of the virtual keyboard.

Optionally, the touch body is a finger of the user.

In another possible implementation, the operation area includes a first operation area and a second operation area; and the key display area of the virtual keyboard is in a middle location of a touch display screen, and the first operation area and the second operation area are on two sides of the key display area of the virtual keyboard; or the key display area of the virtual keyboard is on one side of a touch display screen, the first operation area is on the other side of the touch display screen, and the second operation area overlaps the key display area of the virtual keyboard.

In another possible implementation, the operation area and the key display area are on different touch display screens; or the operation area and the key display area are on different devices.

The virtual keyboard-based input apparatus 1800 according to this embodiment of this application may correspondingly perform the method described in embodiments of this application, and the foregoing and other operations and/or functions of the modules in the virtual keyboard-based input apparatus 1800 are used to implement corresponding procedures of the methods in FIG. 5 to FIG. 17 respectively. For brevity, details are not described herein again.

An embodiment of this application further provides an electronic device, including at least one processor, a memory, and a communication interface. The processor is configured to perform the methods in FIG. 5 to FIG. 17.

FIG. 19 is a diagram of a structure of an electronic device according to an embodiment of this application.

As shown in FIG. 19, the electronic device 1900 includes at least one processor 1901, a memory 1902, a communication interface 1903, and a display screen 1904. The processor 1901, the memory 1902, the communication interface 1903, and the display screen 1904 are communicatively connected in a wired (for example, a bus) or wireless manner. The communication interface 1903 is configured to send and/or receive data sent by another device. The memory 1902 stores computer instructions, and the processor 1901 executes the computer instructions and executes the method in the foregoing method embodiment, to resolve an interaction problem between a virtual keyboard of a wide-screen device and a user, enhance input efficiency, and improve user experience. The display screen 1904 is a touch display screen, and the display screen displays an input interface. The input interface includes a key display area and an operation area of the virtual keyboard. The operation area and the key display area of the virtual keyboard are in different locations.

It should be understood that, in this embodiment of this application, the processor 1901 may be a central processing unit CPU, or the processor 1901 may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, any conventional processor, or the like.

The memory 1902 may include a read-only memory and a random access memory, and provide instructions and data for the processor 1901. The memory 1902 may further include a non-volatile random access memory.

The memory 1902 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be understood that the electronic device 1900 according to this embodiment of this application may perform and implement the methods shown in FIG. 5 to FIG. 17 in embodiments of this application. For detailed descriptions of implementations of the methods, refer to the foregoing descriptions. For brevity, details are not described herein again.

An embodiment of this application provides a computer-readable storage medium, storing a computer program. When the computer instructions are executed by a processor, the methods mentioned above are implemented.

An embodiment of this application provides a chip. The chip includes at least one processor and an interface. The at least one processor determines program instructions or data through the interface. The at least one processor is configured to execute the program instructions to implement the foregoing method.

An embodiment of this application provides a computer program or a computer program product. The computer program or the computer program product includes instructions. When the instructions are executed, a computer is enabled to perform the foregoing method.

A person of ordinary skill in the art may be further aware that, units and algorithm steps of the examples described in combination with embodiments disclosed in this specification can be implemented by electronic hardware, computer software, or a combination of the two. To clearly describe interchangeability between the hardware and the software, compositions and steps of each example have been generally described in the foregoing descriptions based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

The steps of the methods or algorithms described in the embodiments disclosed in this specification may be implemented by hardware and a software module executed by the processor or a combination of hardware and a software module executed by the processor. The software module may be configured in a random access memory (RAM), a memory, a read-only memory (ROM), an electrically programmable ROM, an electrically erasable programmable ROM, a register, a hard disk drive, a removable disk, a CD-ROM, or a storage medium in any other forms well-known in the art.

In the foregoing specific implementations, the objective, technical solutions, and beneficial effects of this application are further described in detail. It should be understood that the foregoing descriptions are merely specific implementations of this application, but are not intended to limit the protection scope of this application. Any modification, equivalent replacement, or improvement made without departing from the spirit and principle of this application should fall within the protection scope of this application.

## Claims

1. A virtual keyboard-based input method, comprising:
displaying an interaction interface of an electronic device, wherein the interaction interface comprises an input box and a virtual keyboard, the virtual keyboard comprises a key display area and an operation area, and the key display area and the operation area are in different locations;
detecting a first input operation performed on the operation area;
mapping the first input operation to an operation on a corresponding key in the key display area, to obtain a second input operation for the virtual keyboard;
obtaining an input event based on the second input operation; and
in response to the input event, displaying, in the input box, input information corresponding to the input event.

2. The method according to claim 1, wherein the first input operation comprises a tap operation; and
mapping the first input operation to the operation on the corresponding key in the key display area, to obtain the second input operation for the virtual keyboard comprises:
obtaining a tap location, of the tap operation, in the operation area;
mapping the tap location to the key display area, to obtain a mapping location; and
obtaining, based on the mapping location, a tap operation for a target key on the virtual keyboard.

3. The method according to claim 2, wherein mapping the tap location to the key display area, to obtain the mapping location comprises:
using the tap location as an input of a neural network model, and outputting the mapping location;
using the tap location and location information of each key on the virtual keyboard as inputs of a neural network, and outputting the mapping location; or
using the tap location and motion information of a touch body as inputs of a neural network, and outputting the mapping location.

4. The method according to any one of claims 1 to 3, wherein the first input operation comprises the tap operation, and several historical tap operations are comprised before the tap operation; and
before mapping the first input operation to the operation on the corresponding key in the key display area, to obtain the second input operation for the virtual keyboard, the method further comprises:
obtaining information about the several historical tap operations; and
adjusting a tap location of a current tap operation based on the information about the several historical tap operations.

5. The method according to claim 4, wherein the several historical tap operations comprise timing information of each historical tap operation in the several historical tap operations and tap location information of each historical tap operation.

6. The method according to any one of claims 1 to 5, further comprising:
in response to the second input operation, generating, in the key display area, a feedback event corresponding to the second input operation.

7. The method according to claim 6, wherein the second input operation comprises the target key being tapped, and the feedback event comprises one or more of the following: the target key being highlighted, the target key vibrating, and the target key being displayed as pressed.

8. The method according to any one of claims 1 to 7, wherein a user performs an input operation on the operation area by using a touch body; and
the method further comprises:
obtaining a spatial location of the touch body;
obtaining a target location of the touch body in the key display area based on the spatial location of the touch body and a mapping relationship, wherein the mapping relationship indicates a mapping relationship between each spatial location of the touch body and each location in the key display area; and
displaying a preset style icon at the target location in the key display area.

9. The method according to claim 8, further comprising:
obtaining image information and/or capacitance signal distribution information and/or depth information distribution information of the touch body; and
visually rendering and displaying, based on the image information and/or the capacitance signal distribution information and/or the depth information distribution information of the touch body, the touch body at the target location in the key display area.

10. The method according to claim 8 or 9, wherein the touch body is a finger of the user.

11. The method according to any one of claims 1 to 10, wherein the operation area comprises a first operation area and a second operation area; and
the key display area is in a middle location of a touch display screen, and the first operation area and the second operation area are on two sides of the key display area; or
the key display area is on one side of a touch display screen, the first operation area is on the other side of the touch display screen, and the second operation area overlaps the key display area.

12. The method according to any one of claims 1 to 10, wherein the operation area and the key display area are on different touch display screens; or
the operation area and the key display area are on different devices.

13. An electronic device, comprising a memory and a processor, wherein the memory stores instructions, and when the instructions are executed by the processor, the method according to any one of claims 1 to 12 is implemented.

14. A computer-readable storage medium, wherein the computer-readable storage medium stores a computer program, and when the computer program is executed by a processor, the method according to any one of claims 1 to 12 is implemented.
